# EUROPÄISCHE PATENTSCHRIFT

(11) **EP 1 924 379 B1**
(45) Veröffentlichungstag und Bekanntmachung des Hinweises auf die Patenterteilung: **22.05.2013**
(21) Anmeldenummer: 06761648.2
(22) Anmeldetag: 14.06.2006
(51) Int. Cl.: B23B 31/20

(54) **VORRICHTUNG ZUM SPANNEN EINES EINEN HOHLKEGELSCHAFT AUFWEISENDEN WERKSTÜCKS ODER WERKZEUGS**
DEVICE FOR CLAMPING A WORKPIECE OR TOOL COMPRISING A HOLLOW SHAFT CONE
DISPOSITIF DE SERRAGE D'UNE PIECE OU D'UN OUTIL COMPORTANT UN CONE A TIGE CREUSE

(30) Priorität: 13.09.2005 DE 102005043722; 15.10.2005 DE 102005049377
(43) Veröffentlichungstag der Anmeldung: 28.05.2008
(73) Patentinhaber: Röhm GmbH, 89567 Sontheim (DE)
(72) Erfinder: HANGLEITER, Eugen, 89268 Hermaringen (DE)
(74) Vertreter: Hentrich, Swen
(86) Internationale Anmeldenummer: PCT/DE2006/001016
(87) Internationale Veröffentlichungsnummer: WO 2007/031045

(56) Entgegenhaltungen:
- EP-A- 1 308 231
- DE-U1- 8 215 293
- US-A- 3 568 566
- US-A- 4 668 137

## Beschreibung

Die Erfindung betrifft eine Vorrichtung zum Spannen eines einen Hohlschaftkegel oder dergleichen aufweisenden Werkstücks oder Werkzeugs, mit einem in einem Grundkörper axial verstellbar gelagerten Zugbolzen zur Betätigung eines mit Spannklauen zusammenwirkenden Spannkopfes, wobei die axiale Lage des Zugbolzens in der Spannstellung ohne Ausnutzung der Kraft einer Spannfeder durch Selbsthemmung gesichert ist.

Die Betätigung derartiger Vorrichtungen erfolgt, indem der Zugbolzen axial verstellt wird, nämlich zum Spannen mit einer Zugkraft belastet wird, während zum Lösen der Einspannung des Werkstücks oder Werkzeugs eine Druckkraft auf den Zugbolzen einwirkt, um diesen axial wieder in die Lösestellung zu verschieben. Um in der Spannstellung die axiale Position des Zugbolzens zu sichern, ist es im Stand der Technik üblich, diesen durch eine Spannfeder zu beaufschlagen, wozu in der Regel Tellerfederpakete oder Sohraubentellerfedern eingesetzt werden, die mit hoher Kraft den Zugbolzen in die Spannstellung pressen und dessen Lage sichern, auch wenn die Zugkraft vom Zugbolzen gelöst wird. Nachteilig ist dabei allerdings, dass durch das Tellerfederpaket die Auswuchtqualität der rotierenden Spindel der die Vorrichtung tragenden Werkzeugmaschine 10 beeinträchtigt wird. Aus der US 4 668 137 ist eine Vorrichtung der eingangs genannten Art bekannt, bei der im Falle eines Federbruchs eine Sicherung durch Selbsthemmung, also unabhängig von der Kraft der Spannfeder gegeben ist. Diese Spannfeder ist allerdings ein unverzichtbarer Bestandteil der Vorrichtung mit den vorstehend genannten Nachteilen.

Auch die US 3 568 566 offenbart eine Vorrichtung, bei der mittels Selbsthemmung die Verstellung von Spannklauen blockiert ist.

Der Erfindung liegt daher die Aufgabe zugrunde, eine Vorrichtung der eingangs genannten Art so auszubilden, dass die Auswuchtqualität verbessert werden kann.

Diese Aufgabe wird nach der Erfindung bei einer Vorrichtung der eingangs genannten Art dadurch gelöst, daß an dem Grundkörper axial unverschieblich eine Spinnhülse angeordnet ist, an der eine Schleppzange axial geführt ist, die mit ihrer Innenseite dem Zugbolzen anliegt, daß der Zugbolzen einen Konuskopf, die Schleppzange einen Keilring und die Spannhülse einen Innenkonus aufweist, daß der Konuskopf sich mit einem radialen Absatz zum Zugbolzen verjüngt, daß die Schieppzange einen Innenbund zur Anlage an den Absatz aufweist, und daß die Schleppzange mit ihrem Innenbund im axialen Bereich des Innenkonus der Spannhülse dem Absatz ausweichen kann.

Mit einer derartigen Vorrichtung ist der Vorteil verbunden, dass nach dem Kraftaufbau die Einleitung der Zugkraft vom Zugbolzen getrennt werden kann und die eingeleitete Kraft über die Selbsthemmung gespeichert wird, und zwar ohne daß es einer Spannfeder bedarf. Die Auswuchtqualität der rotierenden Spindel der Werkzeugmaschine wird deutlich verbessert und es können höhere Drehzahlen erreicht werden. Außerdem ergibt sich der Vorteil, dass die Montage vereinfacht ist, weil die erforderlichen Bauteile in einfacher Weise axial von vorne in den Grundkörper eingeführt werden können, ohne dadurch durch die Spannfeder behindert zu werden. Durch den Konuskopf, den Keilring sowie den Innenkonus wird in einfacher Weise durch axiale gegenseitige Verstellung der beteiligten Bauteile die erforderliche hohe Klemmkraft erreicht, die auch mit der gebotenen Sicherheit beibehalten wird, um bei hohen Drehzahlen das Werkstück oder das Werkzeug sicher zu spannen.

Mit dieser Gestaltung ist sichergestellt, dass durch die axiale Verstellung des Zugbolzens in die Spannstellung vermittelt über die Schleppzange eine große axiale Verstellung des Spannkopfes erfolgt zur Anlage der Spannklauen an den Hohlschaftkegel und Erzeugung einer Vorspannung, wobei bei fortgesetzter Verstellung des Zugbolzens der Keilring der Schleppzange radial nach außen ausweicht und an dem Konuskopf zur Anlage kommt. Dadurch reduziert sich bei einem gegebenen axialen Weg des Zugbolzens zwar die axiale Verstellung der Schleppzange, aber es erfolgt mit gesteigerter Kraft eine große Selbsthemmung, indem buchstäblich der Keilring zwischen dem Konuskopf und dem Innenkonus der Spannhülse verkeilt wird. Diese Position der Schleppzange bleibt erhalten, auch wenn die axiale Zugkraft auf den Zugbolzen gelöst wird, so dass der Zugbolzen mit der kompletten Spindel der Werkzeugmaschine berührungslos zu einem möglichen Betätigungssystem rotieren kann.

Im Rahmen der Erfindung ist weiterhin vorgesehen, dass die Schleppzange zur axialen Verstellung des Spannkopfes mit diesem über einen Gewindebolzen sowie einen Gewindering gekoppelt ist. Prinzipiell besteht die Möglichkeit, die Schleppzange unmittelbar auf den Spannkopf einwirken zu lassen, wobei die mehrteilige Ausbildung unter Verwendung des Gewindebolzens und des Gebinderinges Vorteile hinsichtlich der Fertigung, Montage und der Kühlmitteldurchführung bietet.

Um eine Drehbewegung der Schleppzange relativ zu der Spannhülse zu vermeiden, durch die es zu einer Schrägstellung der Zangenbacken kommen könnte mit dem Ergebnis der Erzeugung einer undefinierten Klemmkraft, ist die Schleppzange in einem Langloch der Spannhülse geführt.

Als günstig hat es sich im Rahmen der Erfindung erwiesen, wenn der Konuskopf einen Konuswinkel von 4° bis 8°, insbesondere von 6° aufweist, da dieser Winkel vorteilhaft die Erfordernisse einer ausreichenden axialen Verstellung der Schleppzange beim Verschieben des Zugbolzens und des Anpressens des Keilringes der Schleppzange gegen den Innenkonus der Spannhülse kombiniert erfüllt.

Dies wird gefördert, wenn der Innenkonus der Spannhülse einen Konuswinkel von 9° bis 15°, insbesondere von 12° aufweist, wobei zweckmäßigerweise dann zur Gewährleistung einer großen Anlagefläche die Innenumfangsfläche des Keilrings eine dem Konuswinkel des Konuskopfes und die Außenumfangsfläche des Keilrings eine dem Konuswinkel der Spannhülse entsprechende Neigung aufweist.

Weiterhin ist es vorteilhaft, wenn der Konuskopf eine Anlagefläche aufweist, die am Gewindering zur Anlage kommt, wenn der Innenbund der Schleppzange den Absatz des Konuskopfes hintergreift. Durch diese Gestaltung ist sichergestellt, dass ohne ein Spiel bei der Verstellung des Zugbolzens von der Lösestellung in die Spannstellung die Schleppzange mitgenommmen wird, also die Schleppzange mit ihrem Innenbund bündig den Absatz des Zugbolzens hintergreift.

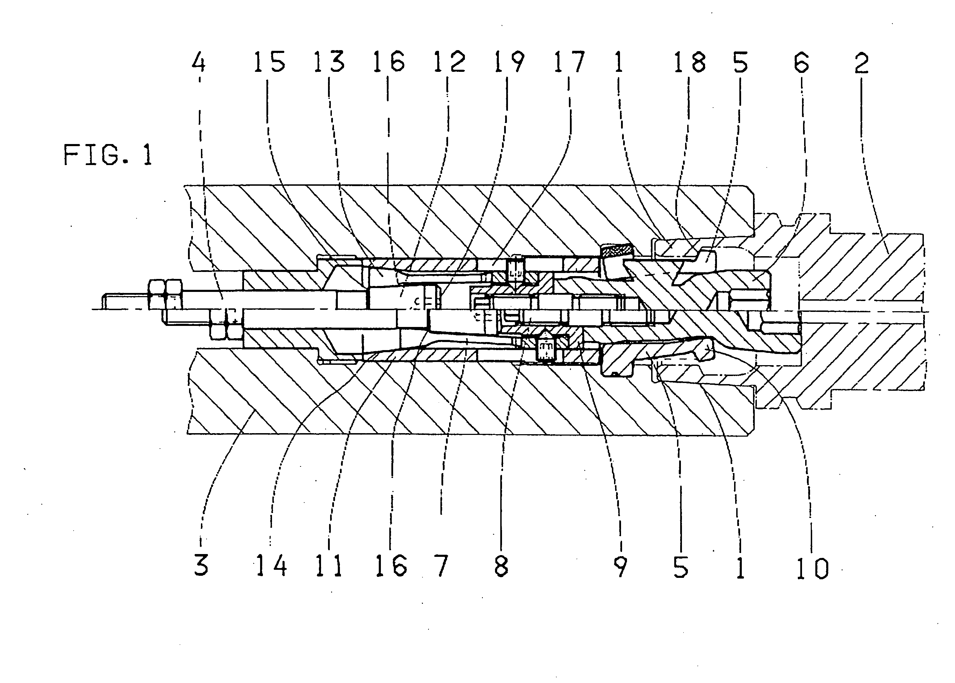

Im folgenden wird die Erfindung an einer in der Zeichnung dargestellten Ausführungbeispiel näher erläutert; die einzige Figur 1 zeigt einen Längsschnittt durch die erfindungsgemäße Vorrichtung.

In der Zeichnung ist eine Vorrichtung dargestellt, die zum Spannen eines einen Hohlschaftkegel 1 aufweisenden Werkstücks 2 oder Werkzeugs dient, wozu die Vorrichtung einen in einem Grundkörper 3 axial verstellbar gelagerten Zugbolzen 4 aufweist, der zur Betätigung eines mit Spannklauen 5 zusammenwirkenden Spannkopfes 6 vorgesehen ist, nämlich durch eine axiale Verstellung des Zugbolzens 4 zwischen einer Lösestellung, die in der Zeichnung in der unteren Hälfte dargestellt ist, und einer in der oberen Hälfte der Zeichnung dargestellten Spannstellung. Zum Spannen des Werkstücks 2 wird der Zugbolzen 4 aus der Lösestellung in die Spannstellung gezogen durch eine in der Zeichnung selber nicht dargestellte Betätigungsvorrichtung, wobei vermittelt über eine Schleppzange 7 und einen Gewindebolzen 8 sowie einen Gewindering 9 der Spannkopf 6 axial verstellt wird und dadurch radial die Klauenköpfe 10 der Spannklauen 5 verstellt zur Anlage an den Hohlschaftkegel 1.

Beachtenswert bei der in der Zeichnung dargestellten Vorrichtung ist, dass in dem Grundkörper 3 axial unverschieblich eine Spannhülse 11 angeordnet ist, an der die Schleppzange 7 axial geführt ist, die mit ihrer Innenseite am Zugbolzen 4 anliegt, wobei der Zugbolzen 4 einen Konuskopf 12, die Schleppzange 7 einen Keilring 13 und die Spannhülse 11 einen Innenkonus 14 aufweist, so dass im Ergebnis bei der Verstellung des Zugbolzens 4 aus der Lösestellung in die Spannstellung Selbsthemmung eintritt, die die axiale Lage der Schleppzange 7 bestimmt, auch ohne daß von der Betätigungseinrichtung weiterhin eine Zugkraft auf den Zugbolzen 4 ausgeübt wird. Die von der Betätigungseinrichtung über den Zugbolzen 4 eingeleitete Kraft wird daher mittels der Selbsthemmung quasi gespeichert und die sichere Einspannung des Werkstücks 2 an seinem Hohlschaftkegel 1 ist gewährleistet, ohne daß dazu die Kraft einer Spannfeder ausgenutzt werden muss, die in der Spannstellung die axiale Lage des Zugbolzens 4 mit ihrer Federkraft gegenüber dem Grundkörper 3 oder der Spannhülse 11 gewährleisten müßte. Die Sicherheit der Einspannug ist daher durch eine Ermüdung der Spannfeder nicht gefährdet. Darüber hinaus wird durch den Einsatz der erfindungsgemäß vorgesehen Selbsthemmung erreicht, dass der nicht von der Spannfeder beaufschlagte Zugbolz 4 mit der kompletten Spindel bzw. den Grundkörper 3 rotieren kann, ohne in Verbindung mit seinem Betätigungssystem stehen zu müssen, so dass die Auswuchtqualität verbessert ist und die Drehzahl erhöht werden kann.

Aus der Zeichnung ist weiterhin ersichtlich, dass der Konuskopf 12 sich mit einem radialen Absatz 15 zum Zugbolzen 4 verjüngt, dass die Schleppzange 7 einen Innenbund 16 zur Anlage an den Absatz 15 aufweist und daß die Schleppzange 7 mit ihrem Innenbund 16 im axialen Bereich des Innenkonus 14 der Spannhülse 11 dem Absatz 15 ausweichen kann. Bei dem in der Zeichnung dargestellten Ausführungsbeispiel weist der Konuskopf 12 einen Konuswinkel von 6° auf, während der Innenkonus 14 der Spannhülse 11 einen Konuswinkel von 12° besitzt. Die Neigung der Innenumfangsfläche sowie der Außenumfangsfläche des Keilrings 13 korrespondiert mit der Neigung der entsprechend anliegenden Bauteile.

Im folgenden wird die Funktionsweise der Vorrichtung kurz geschildert. Ausgehend von der in der unteren Hälfte dargestellten Lösestellung wird durch die nicht dargestellte Betätigungseinrichtung auf den Zugbolzen 4 eine Zugkraft ausgeübt, durch die der Zugbolzen 4 in der Zeichnung nach links verstellt wird. Bei dieser Verstellung nimmt der Zugbolzen 4 durch die Anlage des Innenbundes 16 der Schleppzange 7 an dem Absatz des Zugbolzens 4 zunächst die Schleppzange 7, die zur Vermeidung einr Unwucht in zwei Langlöchern 17 gegenüber der Spannhülse geführt ist, und vermittelt über den Gewindebolzen 8 den Gewindering 9 den Spannkopf 6 mit, der bewirkt, dass die Spannklauen 5 mit ihrem Klauenköpfen 10 radial nach außen verschwenken und zur Anlage an die Hinterschneidung 18 des Hohlschaftkegels 1 gelangen. Durch das Zusammenwirken des Absatzes 15 mit dem Innenbund 16 wird also eine schnelle axiale Verstellung des Spannkopfes 6 erreicht, während nach Erreichen eines vorbestimmten zurückgelegten axialen Weges der Innenbund 16 der Schleppzange 7 dem Absatz 15 ausweichen kann und mit der Innenumfangsfläche des Keilringes 13 an dem Konuskopf 12 zur Anlage kommt und zugleich mit der Außenumfangsfläche gegen den Keilring 13 der Spannhülse 11 gepresst wird. Bei fortgesetzter axialer Verstellung der Zugbolzens 4 wird dadurch die Schleppzange 7 nur noch geringfügig in axialer Richtung mitgeschleppt, dafür aber mit gesteigerter Kraft zwischen dem Konuskopf 12 und der Spannhülse 11 verkeilt bis Selbsthemmung erreicht ist, die die erzielte Spannkraft auch dann bereitstellt, wenn die Zugkraft der Betätigungseinrichtung von dem Zugbolzen 4 abgetrennt wird.

Soll nunmehr die Einspannung gelöst werden, wird der Zugbolzen 4 von der Spannstellung in die Lösestellung von links nach rechts verstellt, wodurch die Klemmung der Schleppzange 7 zwischen dem Konuskopf 12 und der Spannhülse 11 gelöst wird und der Zugbolzen 4 sich auch relativ zu der Schleppzange 7 verstellt, bis dieser mit seiner Anlagefläche 19 an dem Gewindering 9 zur Anlage kommt und der Innenbund 16 den Absatz 15 des Zugbolzens 4 wieder hintergreifen kann. Die fortgesetzte Verstellung des Zugbolzens 4 bewirkt die Verschiebung des Spannkopfes 6, so dass die Spannklauen 5 mit ihren Klauenköpfen 10 das Werkstück 2 freigeben.

## Patentansprüche

1. Vorrichtung zum Spannen eines einen Hohtschaftkegel (1) oder dergl. aufweisenden Werkstücks (2) oder Werkzeugs, mit einem in einem Grundkörper (3) axial verstellbar gelagerten Zugbolzen (4) zur Betätigung eines mit Spannklauen (5) zusammenwirkenden Spannkopfes (6), wobei die axiale Lage des Zugbolzens (4) in der Spannstellung ohne Ausnutzung der Kraft einer Spannfeder durch Selbsthemmung gesichert ist, wobei in dem Grundkörper (3) axial unverschieblich eine Spannhülse (11) angeordnet ist, an der eine Schleppzange (7) axial geführt ist, die mit ihrer Innenseite dem Zugbolzen (4) anliegt, wobei der Zugbolzen (4) einen Konuskopf (12), die Schleppzange (7) einen Keilring (13) und die Spannhülse (11) einen Innenkonus (14) aufweist, **dadurch gekennzeichnet. daß** der Konuskopf (12) sich mit einem radialen Absatz (15) zum Zugbolzen (4) verjüngt, daß die Schleppzange (7) einen Innenbund (16) zur Anlage an den Absatz (15) aufweist, und daß die Schleppzange (7) mit ihrem Innenbund (16) im axialen Bereich des Innenkonus (14) der Spannhülse (11) dem Absatz (15) ausweichen kann.

2. Vorrichtung nach Anspruch 1. **dadurch gekennzeichnet. daß** die Schleppzange (7) zur axialen Verstellung des Spannkopfes (6) mit diesem über einen Gewindebolzen (8) sowie einen Gewindering (9) gekoppelt ist.

3. Vorrichtung nach Anspruch 1 oder 2, **dadurch gekennzeichnet, daß** die Schleppzange (7) in mindestens einem Langloch (17) der Spannhülse (11) geführt ist.

4. Vorrichtung nach einem der Ansprüche 1 bis 3, **dadurch gekennzeichnet, daß** der Konuskopf (12) einen Konuswinkel von 4° bis 8°, insbesondere von 6° aufweist.

5. Vorrichtung nach einem der Ansprüche 1 bis 4, **dadurch gekennzeichnet, daß** der Innenkonus (14) der Spannhülse (11) einen Konuswinkel von 9° bis 15°, insbesondere von 12° aufweist.

6. Vorrichtung nach Anspruch 4 oder 5, **dadurch gekennzeichnet, daß** die Innenumfangsfläche des Keilrings (13) eine dem Konuswinkel des Konuskopfes (12) und die Außenumfangsfläche des Keilrings (13) eine dem Konuswinkel der Spannhülse (11) entsprechende Neigung aufweist.

7. Vorrichtung nach einem der Ansprüche 1 bis 6, **dadurch gekennzeichnet, daß** der Konuskopf (12) eine Anlagefläche (19) aufweist, die am Gewindering (9) zur Anlage kommt, wenn der Innenbund (16) der Schleppzange (7) den Absatz (15) des Konuskopfes (12) hintergreift.

## Claims

1. A device for clamping a tool or workpiece (2) having a hollow shaft cone (1) or the like, comprising a pull rod (4) mounted axially displaceably in a main body (3) for actuation of a clamping head (6) cooperating with clamping jaws (5), wherein the axial position of the pull rod (4) is secured in the clamping position without utilisation of the force of a clamping spring by a self locking action, wherein arranged axially non-displaceably in the main body (3) is a clamping sleeve (11) at which there is axially guided a draw gripper (7) which bears with its inside against the pull rod (4), wherein the pull rod (4) has a cone head (12), the draw gripper (7) has a conical ring (13) and the clamping sleeve (11) has an internal cone (14), **characterised in that** the cone head (12) narrows with a radial step (15) to the pull rod (4), the draw gripper (7) has an internal shoulder (16) for bearing against the step (15) and the draw gripper (7) with its internal shoulder (16) can evade the step (15) in the axial region of the internal cone (14) of the clamping sleeve (11).

2. A device according to claim 1 **characterised in that** the draw gripper (7) for axial displacement of the clamping head (6) is coupled thereto by way of a threaded bolt (8) and a threaded ring (9).

3. A device according to claim 1 or claim 2 **characterised in that** the draw gripper (7) is guided in at least one slot (17) in the clamping sleeve (11).

4. A device according to one of claims 1 to 3 **characterised in that** the cone head (12) has a cone angle of 4° to 8°, in particular 6°.

5. A device according to one of claims 1 to 4 **characterised in that** the internal cone (14) of the clamping sleeve (11) has a cone angle of 9° to 15°, in particular 12°.

6. A device according to claim 4 or claim 5 **characterised in that** the inside peripheral surface of the conical ring (13) has an inclination corresponding to the cone angle of the cone head (12) and the outside peripheral surface of the conical ring (13) has an inclination corresponding to the cone angle of the clamping sleeve (11).

7. A device according to one of claims 1 to 6 **characterised in that** the cone head (12) has a contact surface (19) which comes to bear against the threaded ring (9) when the internal shoulder (16) of the draw gripper (7) engages behind the step (15) of the cone head (12).

## Revendications

1. Dispositif de serrage d'une pièce (2) ou d'un outil présentant un cône à tige creuse (1) ou analogue, qui comporte un boulon tirant (4) monté de manière à présenter une mobilité axiale dans un corps de base (3) et destiné à actionner une tête de serrage (6) qui coopère avec des griffes de serrage (5), la position axiale du boulon tirant (4) dans la position de serrage étant assurée par autoblocage sans utilisation de la force d'un ressort de tension, dans le corps de base (3) étant disposée de manière fixe axialement une douille de serrage (11) sur laquelle est guidée axialement une pince traînante (7) qui est en appui par son côté intérieur sur le boulon tirant (4), le boulon tirant (4) présentant une tête conique (12), la pince traînante (7) une bague de calage (13) et la douille de serrage (11) un cône intérieur (14), **caractérisé en ce que** la tête conique (12) se rétrécit sous forme d'épaulement radial (15) vers le boulon tirant (4), **en ce que** la pince traînante (7) prèsente un collet intérieur (16) pour l'appui sur l'épaulement (15), et **en ce que** la pince traînante (7) avec son collet intérieur (16) peut échapper à l'épaulement (15) dans la zone axiale du cône intérieur (14) de la douille de serrage (11).

2. Dispositif selon la revendication 1, **caractérisé en ce que**, pour le réglage axial de la tête de serrage (6), la pince traînante (7) est couplée à celle-ci par un boulon fileté (8) et une bague filetée (9).

3. Dispositif selon la revendication 1 ou 2, **caractérisé en ce que** la pince traînante (7) est guidée dans au moins un trou oblong (17) de la douille de serrage (11).

4. Dispositif selon une des revendications 1 à 3, **caractérisé en ce que** la tête conique (12) présente un angle de cône de 4° à 8°, en particulier de 6°.

5. Dispositif selon une des revendications 1 à 4, **caractérisé en ce que** le cône intérieur (14) de la douille de serrage (11) présente un angle de cône de 9° a 15°, en particulier de 12°.

6. Dispositif selon la revendication 4 ou 5, **caractérisé en ce que** la surface périphérique intérieure de la bague de calage (13) présente une inclinaison qui correspond à l'angle de cône de la tête conique (12), et la surface périphérique extérieure de la bague de calage (13) présente une inclinaison qui correspond à l'angle de cône de la douille de serrage (11).

7. Dispositif selon une des revendications 1 à 6, **caractérisé en ce que** la tête conique (12) présente une surface d'appui (19) qui vient en appui sur la bague filetée (9) lorsque le collet intérieur (16) de la pince traînante (7) vient en prise derrière l'épaulement (15) de la tête conique (12).
